# EUROPEAN PATENT SPECIFICATION

(11) **EP 1 638 061 B1**
(45) Date of publication and mention of the grant of the patent: **21.11.2007**
(21) Application number: 05020260.5
(22) Date of filing: 16.09.2005
(51) Int. Cl.: G08B 13/14

(54) **Vehicle on-board article theft warning system**
Diebstahlwarnsystem für in einem Fahrzeug transportierte Gegenstände
Dispositif d'alarme anti-vol pour des objets transportés dans un véhicule

(30) Priority: 16.09.2004 JP 2004270133
(43) Date of publication of application: 22.03.2006
(73) Proprietor: Mazda Motor Corporation, Aki-gun, Hiroshima (JP)
(72) Inventor: Ohmura, Hiroshi, Aki-gun Hiroshima 735-8670 (JP); Ikeda, Kenichi, Aki-gun Hiroshima 735-8670 (JP); Awane, Rie, Aki-gun Hiroshima 735-8670 (JP)
(74) Representative: Herrmann, Uwe

(56) References cited:
- US-A1- 2004 069 850

## Description

### BACKGROUND OF THE INVENTION

This invention relates to a vehicle on-board article theft warning system, particularly to a vehicle on-board article theft warning system that utilizes IC chips.

### DESCRIPTION OF THE PRIOR ART

Theft of articles from parked motor vehicles is increasing. Warning systems have been introduced to cope with theft attempts by issuing a warning when a vehicle side door, trunk lid or the like is opened by a method other than the normal one. (See, for example, Japanese Patent Unexamined Publication No. 2001-71870 (Reference)).

On the other hand, recent years have seen progressive practical implementation of systems for managing commodities by storing information regarding articles (commodities) in IC chips (known, for example, as IC tags and RFID tags) and attaching the IC chips to the commodities. Such IC chips store ID information regarding the articles to which they are attached, such as the article type, manufacturer, production date and the like. The stored ID information can be read contactlessly using a reader. Use of such IC chips for commodity management and the like is expected to expand to a very broad range of commodities in future years.

An example of a prior art system can be seen in US-A-2001/069850.

### SUMMARY OF THE INVENTION

It is therefore an object of the present invention to provide a vehicle on-board article theft warning system that utilizes IC chips storing article information to produce theft warnings by a method totally different from conventional warning systems such as that taught by Reference.

This invention provides a vehicle on-board article theft warning system comprising: detection means for detecting on-board article-specific ID information transmitted from IC chips attached to on-board articles; ID information storing means at activation of a theft detection mode for storing as initial ID information the article-specific ID information detected by the detection means; discrimination means after activation of the theft detection mode for comparing detected ID information consisting of on-board article-specific ID information detected by the detection means with the initial ID information and discriminating whether or not there exists missing ID information defined as ID information contained in the initial ID information but not contained in the detected ID information; and warning means responsive to a discrimination that missing ID information exists for determining that theft of an article corresponding to the missing ID information occurred and issuing a prescribed warning.

"On-board articles" as termed in this specification means all objects of value present in a motor vehicle, including audio equipment, navigation equipment and other equipment installed in the vehicle, as well as sunglasses, wallets, cameras, personal computers, clothing and other objects brought into the vehicle by the driver or passengers. For the purposes of the present invention, such "on-board articles" are assumed to be attached with IC chips storing ID information regarding the articles.

The vehicle on-board article theft warning system of the foregoing configuration is capable of determining occurrence of theft and issuing a warning based on on-board article ID information, thereby enabling the detection of on-board article theft and the issuing of a warning by a method totally different from that of the prior art.

In a preferred aspect of the invention, the theft detection mode is activated upon elapse of a prescribed time period after locking of the vehicle doors.

This aspect of the invention prevents ID information on an article carried on the person of the driver or passengers as they depart from the region of the vehicle after door-locking from being detected by the detection means (reader) and stored as initial ID information constituting on-board article ID information. Any article removed from the vehicle by the driver or a passenger can therefore be prevented from being erroneously discriminated as a stolen article.

In another preferred aspect of the invention, the detection means detects ID information at activation of the theft detection mode multiple times and the ID information storing means excludes from ID information to be stored as the initial ID information any ID information that was detected in the first of the multiple detections but was not detected in and after the second or a later detection.

This aspect of the invention prevents ID information on articles carried on the person of the driver and passengers when they depart from the region of the vehicle after door-locking from being detected by the detection means (reader) and registered as initial ID information constituting on-board article ID information. Since this prevents ID information on any article removed from the vehicle by the driver or a passenger from being registered as initial ID information, it prevents the article from being erroneously discriminated as a stolen article when the ID information on the removed article is not detected.

In another preferred aspect of the invention, the detection means detects ID information at activation of the theft detection mode multiple times and the ID information storing means excludes from ID information to be stored as the initial ID information any ID information that was detected in the first of the multiple detections but was not detected simultaneously with pre-registered ID information in and after the second or a later detection.

The pre-registered ID information includes, for example, ID information on a mobile telephone owned by the driver. In this aspect of the invention, in the case of an article whose ID information came not to be detected at the same time as the ID information on, for example, a mobile telephone owned by the driver came not to be detected, the ID information on the article is not registered as initial ID information because the probability of the article having been removed from the vehicle by the driver or a passenger is high. Since this prevents ID information on the article removed from the vehicle by the driver or a passenger from being registered as initial ID information, it prevents the article from being erroneously discriminated as a stolen article when the ID information on the removed article is not detected.

In another preferred aspect of the invention, the detection means detects ID information at activation of the theft detection mode multiple times and the ID information storing means includes among the ID information to be stored as the initial ID information any ID information that during the multiple detections was detected in a detection in which pre-registered ID information came not to be detected or in a detection thereafter.

The pre-registered ID information includes, for example, ID information on a mobile telephone owned by the driver. In this aspect of the invention, when ID information on, for example, a mobile telephone owned by the driver is no longer detected, it is decided at this time point that the driver and passengers have left the region of the vehicle and ID information detected at this time point is registered as initial ID information. Since this prevents ID information on the article removed from the vehicle by the driver or a passenger from being registered as initial ID information, it prevents the article from being erroneously discriminated as a stolen article when the ID information on the article is not detected.

In another preferred aspect of the invention, the detection means detects ID information at activation of the theft detection mode multiple times and the ID information storing means includes among ID information to be stored as the initial ID information only ID information detected in all detections during the multiple detections.

ID information not detected during all detections might include, for example, ID information on an article other than an on-board article such as ID information on an article on the person of a pedestrian passing near the vehicle. The probability of ID information of this type not being detected at the time of a detection after activation of the theft detection mode is high, so that if it should be stored as initial ID information, theft is likely to be erroneous discriminated. The foregoing aspect of the invention prevents this kind of erroneous discrimination.

In another preferred aspect of the invention, the ID information storing means responds to discovery of new ID information in the second or a later detection of the multiple detections conducted at activation of the theft detection mode by transmitting to a prescribed user terminal a signal inquiring whether or not the new ID information is to be registered as initial ID information and responds to a response signal from the user terminal to the effect that it is to be registered by registering the newly detected ID information as initial ID information.

Cases in which new ID information is detected shortly after activation of the theft detection mode are not limited to ones in which, for example, a pedestrian passes near the vehicle but also include ones in which the driver or a passenger of the vehicle bring a new on-board article into the vehicle. In such a situation, it is conceivable that the user may want to register the ID information on the new on-board article as initial ID information. The vehicle on-board article theft warning system cannot decide whether a new on-board article was brought into the vehicle or whether the on-board article needs to be registered. The foregoing aspect enables registration of ID information on a new on-board article (putting it under the protection of the theft warning thereto) based on the user's reply, thereby reflecting the user's intention.

In another preferred aspect of the invention, the detection means detects ID information at activation of the theft detection mode multiple times, the vehicle on-board article theft warning system further comprises reception strength change detection means for detecting change in detected ID information reception strength multiple times, and the ID information storing means excludes from ID information to be stored as the initial ID information at the activation of the theft detection mode any ID information for which change in reception strength is detected by the reception strength change detection means.

ID information for which change in reception strength is detected, i.e., ID information from a moving IC chip, can be considered to be ID information on an article other than an on-board article such as ID information on an article on the person of a pedestrian passing near the vehicle. The probability of ID information of this type not being detected at the time of a detection after activation of the theft detection mode is high, so that if it should be stored as initial ID information, theft is likely to be erroneous discriminated. The foregoing aspect of the invention prevents this kind of erroneous discrimination

In another preferred aspect of the invention, the detection means detects ID information at the activation of the theft detection mode multiple times starting from before the vehicle is stopped and the ID information storing means excludes from ID information to be stored as the initial ID information any ID information not detected during vehicle driving.

This aspect of the invention deals with the possibility of a false warning being issued in a case where an article attached with an IC chip (e.g., a bicycle) was left unattended near the place where the vehicle is to stop before the vehicle stops there, so that if the initial ID information should be established based on ID information detected after the vehicle stops, the ID information on the unattended article will be erroneously recorded as initial ID information, and if the owner of the bicycle rides it away after the activation of the theft detection mode, the ID information on the bicycle will become missing ID information, giving rise to a false warning. The configuration according to the aspect of the invention described above makes it possible to avoid a false warning from being issued in such a case.

In another preferred aspect of the invention, the vehicle on-board article theft warning system further comprises registration means for registering ID information on designated on-board articles beforehand, and the ID information storing means inhibits storage of ID information not registered in the registration means as initial ID information.

In this aspect of the invention, theft discrimination is carried out with respect to only ID information on on-board articles registered beforehand. Therefore, even if at the time of storing the initial ID information, ID information on an article of a person passing near the on-board articles should be erroneously stored as initial ID information and the person then departs from the vicinity of vehicle, the ID information on the article will not thereafter be discriminated as missing ID information in the ID information detection conducted after activation of the theft detection mode. The configuration according to this aspect of the invention described above therefore makes it possible to prevent a false warning from being issued in such a case.

In another preferred aspect of the invention, the ID information detection by the detection means after activation of the theft detection mode and the comparison/discrimination by the discrimination means are conducted at prescribed time intervals during theft detection mode operation.

The vehicle on-board article theft warning system according to this aspect of the invention conducts theft checks at regular time intervals. This makes it possible to estimate the time of theft occurrence, as well as to promptly take such actions as issuing a warning and notifying the driver and/or passengers.

In another preferred aspect of the invention, the vehicle on-board article theft warning system further comprises time memory means for storing the time of occurrence of the missing ID information and the warning means issues a notification of said time in addition to the prescribed warning.

The time notification can be made simultaneously with the notification of occurrence of missing ID information, i.e., of theft occurrence, or at a different time. Otherwise, the time notification can be made in response to a prescribed operation of the user after receiving a theft notification.

The configuration according to this aspect of the invention provides information regarding the time when an on-board article was stolen, thus facilitating the investigation of the theft by the police, for example, and helping the investigators solve the crime in a short time.

In another preferred aspect of the invention, the vehicle on-board article theft warning system further comprises time-of-theft ID information storing means for storing ID information other than the initial ID information detected at the time of occurrence of missing ID information and the warning means issues a notification of the ID information stored by the time-of-theft ID information storing means in addition to the prescribed warning.

The notification of the time-of-theft ID information can be made simultaneously with the notification of occurrence of missing ID information, i.e., of theft occurrence, or at a different time. Otherwise, the time-of-theft ID information notification can be made in response to a prescribed operation of the user after receiving a theft notification.

The configuration according to this aspect of the invention stores not only the initial ID information but also ID information detected at the time of a theft. Since this ID information detected at the time of a theft is ID information on articles on the person of the thief, it facilitates the investigation of the theft by the police, for example, and helps the investigators solve the crime in a short time.

In another preferred aspect of the invention, the ID information detection after activation of the theft detection mode and the discrimination by the discrimination means are conducted during driving.

This aspect of the invention deals with the possibility of an on-board article removed from the vehicle being placed very near the vehicle, such as immediately under the vehicle, in which case the theft would not be detected because the detection means installed in the vehicle would detect the ID information of the on-board article located very near the vehicle and the ID information on the on-board article would not become missing ID information despite the fact that the on-board article was removed from the vehicle. The configuration according to this aspect of the invention described above makes it possible to prevent theft detection failure in such a case because it conducts the theft discrimination based on ID information detected during driving.

The present invention further provides a vehicle on-board article theft warning method comprising: a step of detecting on-board article-specific ID information transmitted from IC chips attached to on-board articles; a step of storing as initial ID information the detected article-specific ID information when a theft detection mode is activated; a step of, in response to activation of the theft detection mode, comparing the detected ID information consisting of on-board article-specific ID information with the initial ID information and discriminating whether or not there exists missing ID information defined as ID information contained in the initial ID information but not contained in the detected ID information; and a step of, in response to a discrimination that missing ID information exists, determining that theft of an article corresponding to the missing ID information occurred and issuing a prescribed warning.

The present invention further provides a vehicle on-board article theft warning program for execution by a computer to implement a vehicle on-board article theft warning method, which program causes the computer to detect on-board article-specific ID information transmitted from IC chips attached to on-board articles; store as initial ID information the detected article-specific ID information when a theft detection mode is activated; respond to activation of the theft detection mode by comparing the detected ID information consisting of on-board article-specific ID information with the initial ID information and discriminating whether or not there exists missing ID information defined as ID information contained in the initial ID information but not contained in the detected ID information; and respond to a discrimination that missing ID information exists by determining that theft of an article corresponding to the missing ID information occurred and issuing a prescribed warning.

The present invention provides a vehicle on-board article theft warning system, method and program that utilize IC chips storing article information to produce theft warnings by a method totally different from conventional warning systems such as that taught by Reference.

### BRIEF DESCRIPTION OF THE DRAWINGS

Figure 1 is a diagram schematically illustrating the configuration of an on-board article theft tracking system incorporating a vehicle on-board article theft warning system that is an embodiment of the present invention.
Figure 2 is a vehicle diagram schematically illustrating constituent elements of the vehicle on-board article theft warning system configured in accordance with an embodiment of the present invention.
Figure 3 is a diagram showing the configuration of an on-board database of a vehicle on-board article theft warning system.
Figure 4 shows an example of a screen used when storing in memory information on articles and the like to which theft warning is to be applied.
Figure 5 is a flowchart showing a process executed by the vehicle on-board article theft warning system when the driver and passengers are away from the vehicle.
Figure 6 is a flowchart showing a process executed when initial ID information is stored in memory.
Figure 7 shows an example of a confirmation displayed on the screen of the user's mobile terminal.
Figure 8 is a flowchart showing a theft discrimination process.
Figure 9 shows an example of a warning sent to and displayed on the screen of the user's mobile terminal.
Figure 10 shows another example of a warning screen displayed on a display device.

### DESCRIPTION OF THE PREFERRED EMBODIMENT

A preferred embodiment of the invention will now be explained with reference to the attached drawings.

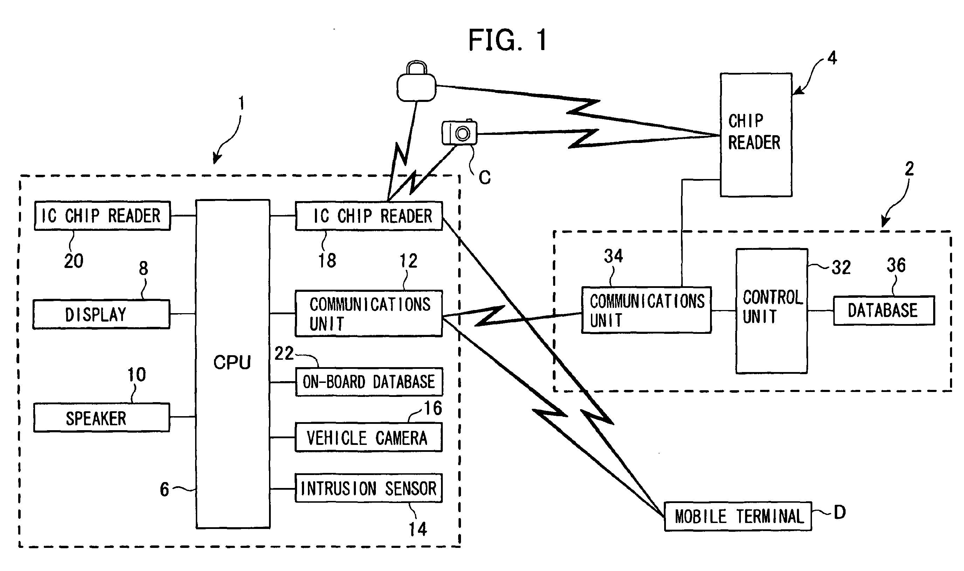

Figure 1 is a diagram schematically illustrating the configuration of an on-board article theft tracking system incorporating a vehicle on-board article theft warning system that is an embodiment of the present invention.

As shown in Figure 1, this on-board article theft tracking system is equipped with, inter alia, a vehicle on-board article theft warning system 1 installed a vehicle, an information center 2 that performs tracking and the like of stolen on-board articles, and external chip readers 4 (only one shown; located at stores and shops, for example) for detecting stolen on-board articles. By "on-board articles" is meant objects of value present in the motor vehicle, including audio equipment, navigation equipment and other equipment installed in the vehicle, as well as sunglasses, wallets, cameras, personal computers, clothing and other objects brought into the vehicle by the driver or passengers. For the purposes of this embodiment, such "on-board articles" are assumed to be attached with IC chips storing ID information regarding the articles.

The on-board article theft tracking system of this embodiment is configured so that when theft (removal from vehicle) of an on-board article (e.g, a camera C) is detected based on ID information and the like from an IC chip attached to the on-board article, the fact of the theft, the name of the stolen on-board article, and ID information thereon are notified to at least the vehicle owner and the information center 2, and, in addition, the chip readers 4 monitor their surrounding areas to detect the stolen on-board article.

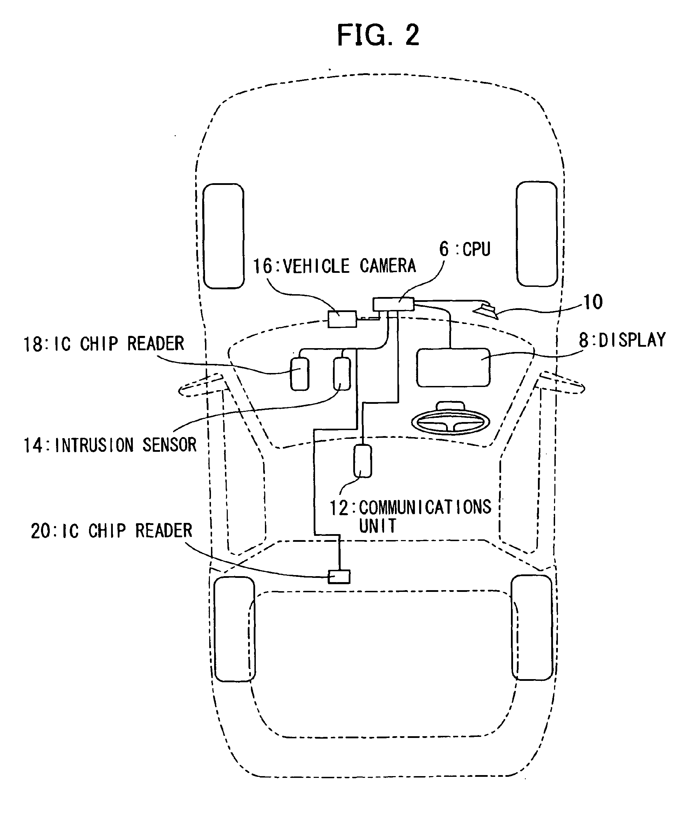

The configuration of the vehicle on-board article theft warning system 1 will now be explained with reference to Figures 1 and 2. Figure 2 is a vehicle diagram schematically illustrating constituent elements of the vehicle on-board article theft warning system 1. The vehicle on-board article theft warning system 1 is equipped with a CPU 6 constituting a theft warning control unit for detecting on-board article theft. The vehicle on-board article theft warning system 1 further includes a display 8, speaker 10, communications unit 12, intrusion sensor 14, vehicle camera 16, IC chip readers 18 and 20, and on-board database 22, all of which are connected to the CPU 6.

The display 8 is of the touch-panel type. It functions both as a unit for displaying various kinds of information and as an input unit. The speaker 10 functions as a warning unit for producing a warning sound at the time of theft occurrence. The communications unit 12 is configured to enable transmission and reception of information between the information center 2 and the mobile terminal (mobile telephone) of the user (vehicle owner or driver). The intrusion sensor 14 is a sensor for detecting, for example, unauthorized entry into the vehicle (a burglar sensor), and the vehicle camera 16 is situated for imaging the interior and exterior of the vehicle.

The IC chip readers 18 and 20 are readers capable of reading ID information relating to articles from IC chips (IC tags, RFID tags) embedded in the articles. They can read ID information not only from IC chips present within the vehicle but also from ones located in the vicinity of the vehicle. In this embodiment, the vehicle on-board article theft warning system 1 is equipped with the two IC chip readers 18, 20 which read information that can be used as the basis for discriminating whether an IC chip is moving and whether it is located inside the vehicle or outside the vehicle.

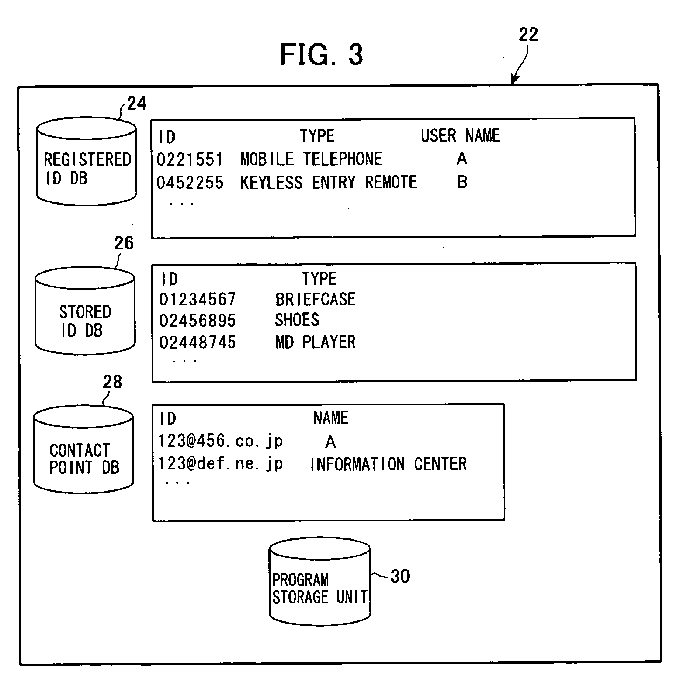

The on-board database 22 stores the ID information on on-board articles read by the IC chip readers 18, 20. As shown in Figure 3, the on-board database 22 of this embodiment comprises a registered ID database 24, stored ID database 26, contact point database 28, and program storage unit 30.

The registered ID database 24 stores user-input ID information of IC chips attached to articles the users regularly carry on their person, such as mobile telephones, and the names of the articles. In the example of Figure 3, a mobile telephone carried by user A and a keyless entry remote control carried by user B are registered in the registered ID database 24.

The stored ID database 26 stores ID information on on-board articles detected by the IC chip readers 18, 20 together with their types.

The contact point database 28 stores information on persons and places to be contacted when theft of an on-board article is detected, such as the user (driver) and the information center. The contact points can be specified as desired by input of a user (e.g., a driver). In the example of Figure 3, the user A and the information center are registered as contact points.

The program storage unit 30 stores control programs of the vehicle on-board article theft warning system 1.

Although in the explanation of this embodiment, the information center 2 will be described only with regard to its stolen on-board article tracking function, it can also incorporate other functions such as a function for distributing map information to vehicles. The information center 2 is equipped with a control unit (computer) 32 for various kinds of processing, a communications unit 34 for communicating with the vehicle communications unit and other outside units, and a database 36 for storing various kinds of information.

The chip readers 4 (only one shown) are installed at conveniences stores and such places often visited by the general public for reading ID information from IC chips that pass nearby. The chip readers 4 are capable of exchanging information with the information center 2. Specifically, they are capable of sending ID information received from IC chips to the information center 2. Although Figure 1 shows only one chip reader 4, the chip readers 4 of this embodiment are installed at numerous locations throughout urban areas in the manner of an infrastructure.

In the vehicle on-board article theft warning system according this embodiment, ID information on articles the driver and passengers regularly carry on their person is recorded and the driver/passengers are judged to be present in or near the vehicle when the registered ID information is detected by the IC chip readers 18, 20. In addition, ID information on articles to be protected by the warning system can also be stored in memory.

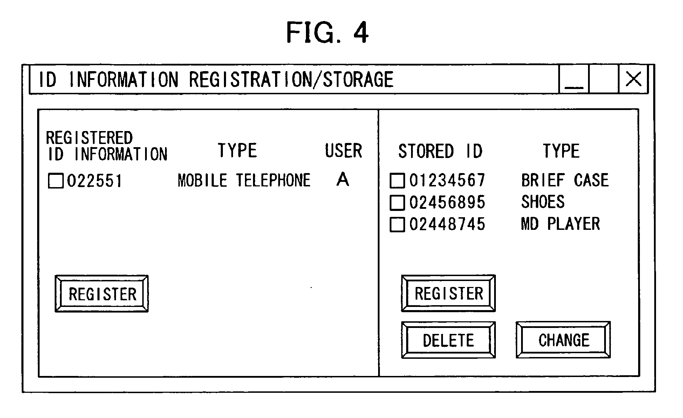

The user can perform the registration and storage of ID information as desired through a settings screen like that shown in Figure 4 that can be brought up on the display 8. In the example shown in Figure 4, ID information 0221551 on user As mobile telephone is registered as ID information for discriminating whether a driver/passenger is nearby, while a briefcase assigned ID information 01234567, shoes assigned ID information 02456895 and an MD player assigned ID information 02448745 are designated as articles to be protected by the warning system. This registered and designated information is stored in the registered ID database 24.

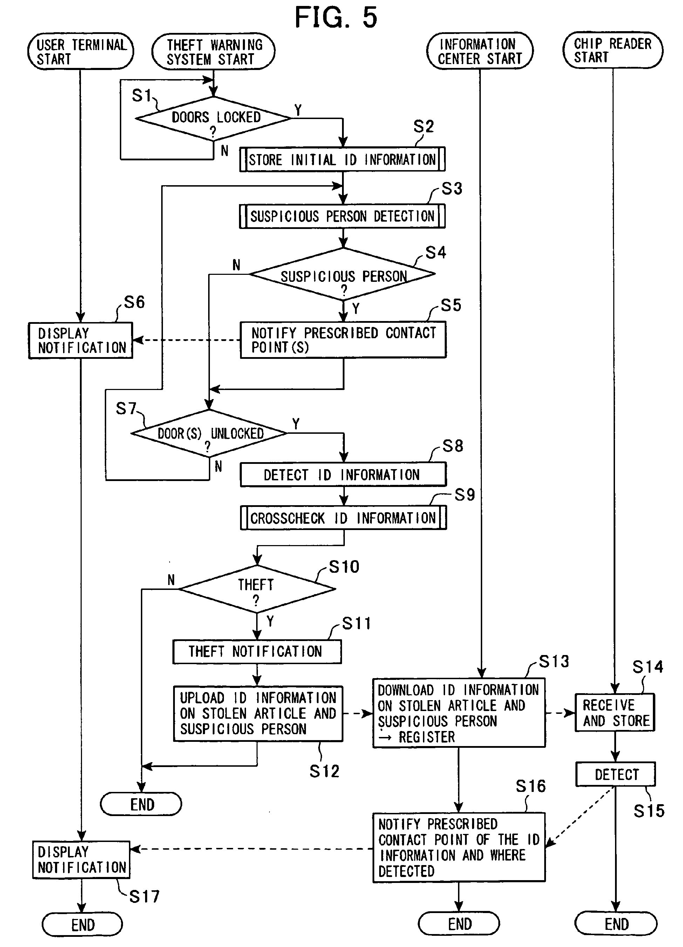

The processing that the vehicle on-board article theft warning system of the on-board article theft tracking system of this embodiment executes while the driver/passengers are moving away from the vehicle following arrival at the destination will now be explained with reference to Figure 5.

Before getting out of the vehicle, the driver turns the intrusion sensor 14 ON. If a door should be forced open or a window broken, the intrusion sensor 14 decides a theft has occurred and issues a prescribed warning and notification. In this embodiment, the intrusion sensor 14 is made operational after a prescribed time period (e.g., 30 seconds) has elapsed following door-locking.

In the processing executed by the vehicle on-board article theft warning system, first, in step S1, it checked whether the vehicle doors are locked. When the result is YES, i.e., when it is found that the doors are locked, control is passed to step S2, in which the ID information on prescribed on-board articles detected by the IC chip readers 18, 20 is stored in the stored ID database 26 of the on-board database 22 as initial ID information.

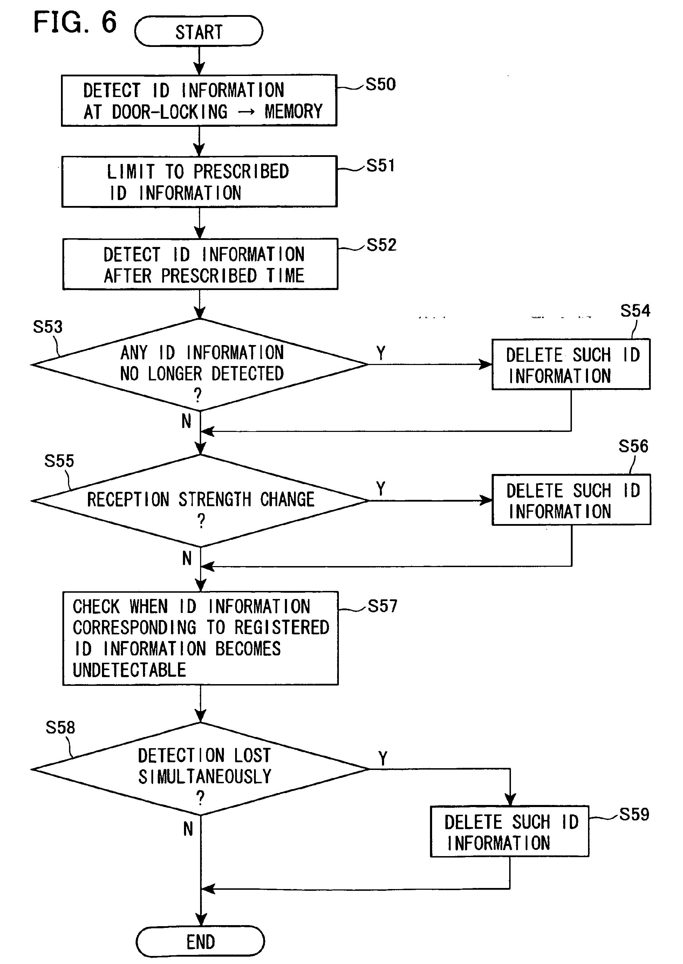

The processing conducted in step S2 will be explained in detail with reference to the flowchart of Figure 6. First, in step 50, the ID information detected by the IC chip readers 18, 20 at the time when door-locking was detected is stored in memory.

Next, in step S51, the stored ID information is limited to the ID information on articles that were designated as ones to be protected by the warning system using the screen of Figure 4. In other words, ID information on articles not designated as ones to be protected by the warning system is deleted from the ID information detected by the IC chip readers 18, 20 and only the ID information on articles that are present in the vehicle and are to be protected by the warning system is stored in the stored ID database 26.

After elapse of a prescribed time period (e.g., 30 seconds) from detection of door-locking (step S1), control is passed to step S52, in which the IC chip readers 18, 20 once again the detect ID information on on-board articles. Next, in step S53, it is checked whether there exists ID information that was stored in the stored ID database 26 in step S51 but was not detected in step S52.

When the result in step S53 is YES, control is passed to step S54, in which the ID information not detected in step S52 is deleted from the ID information stored in the stored ID database 26. The ID information not detected after passage of the prescribed time period is deleted on the assumption the article attached with the IC chip containing the ID information was removed from the vehicle by the driver or a passenger and is no longer an on-board article.

When the result in step S53 is NO or when the processing of step S54 is completed, control is passed to step S55, in which it is checked whether any ID information exists for which the strength of the signal received by the IC chip readers 18, 20 changed between that at door-locking detection and that at the detection in step S52 conducted thereafter. When the result in step S55 is YES, control is passed to step S56, in which the ID information whose signal strength changed is deleted from the ID information stored in the stored ID database 26. ID information whose signal strength changed is ID information from a moving IC chip, not from an IC chip attached to a stationary on-board article, so it is deleted from the ID information on on-board articles.

When the result in step S55 is NO or when the processing of step S56 is completed, control is passed to step S57, in which the ID information received by the IC chip readers 18, 20 is further read at regular time intervals (e.g., every 10 seconds), and when the ID information registered using the screen of Figure 4 as ID information on an article regularly carried on the person of a driver/passenger (in the example of Figure 4, the ID information 0221551 on A's mobile telephone) is found to be no longer detected by the IC chip readers 18, 20, this time point (detection time point) is stored in memory (recorded).

Next, in step S58, it is checked whether ID information exits that was detected before the time point registered in step S57 (detection time) but came not to be detected thereafter. When the result in step 58 is YES, control is passed to step S59, in which ID information that came not to be detected after the time point recorded in step 57 (detection time) is deleted from the ID information stored in the stored ID database 26. This is because an article attached with an IC chip containing this kind of ID information can be assumed to have moved away from the vehicle carried on the person of the driver/passenger.

The ID information that remains after the foregoing processing steps is stored in the stored ID database 26 of the on-board database 22 as the initial ID information (ID information on on-board articles to be protected by the warning system), whereafter the theft detection mode is activated.

In the foregoing example, the first ID information detection/storage (step S50) is conducted at the time locking of the vehicle doors is detected. However, it is possible instead to adopt a configuration that conducts the first detection when the vehicle is driving at low speed (e.g., 30 km/h) before stopping. Such a configuration prevents the ID information of an article located near the stopped vehicle from being erroneously stored as ID information on an on-board article.

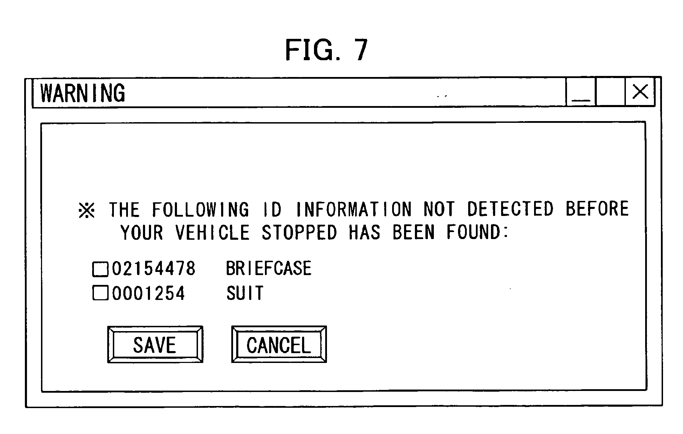

When this configuration is adopted, a further check is made after step S58 or S59 as to whether ID information exists that was not detected during low-speed driving but came to be detected after the vehicle stopped, and when such ID information exists, it is possible, for example to send a screen like that shown in Figure 7 to the user's mobile telephone or the like in order to ask the user whether the ID information that came to be detected after the vehicle stopped should be added to the initial ID information.

In the foregoing example, the later ID information detection (step S52) is conducted only once upon elapse of a prescribed time period following detection of vehicle door-locking. However, it is instead possible to conduct the later detection multiple times at prescribed time intervals and store the ID information detected in all of the detections as the initial ID information, and further possible to store as the initial ID information the ID information detected even after ID information on an article possessed by the user that was registered using the screen of Figure 4 is no longer detected.

Further, at the time of conducting the processing for storing initial ID information in line with the flowchart of Figure 6, the sensitivity of the IC chip readers 18, 20 can be lowered so as to reduce the ID information reception area and lower the probability of ID information from IC chips attached to articles located outside the vehicle being detected as ID information on on-board articles.

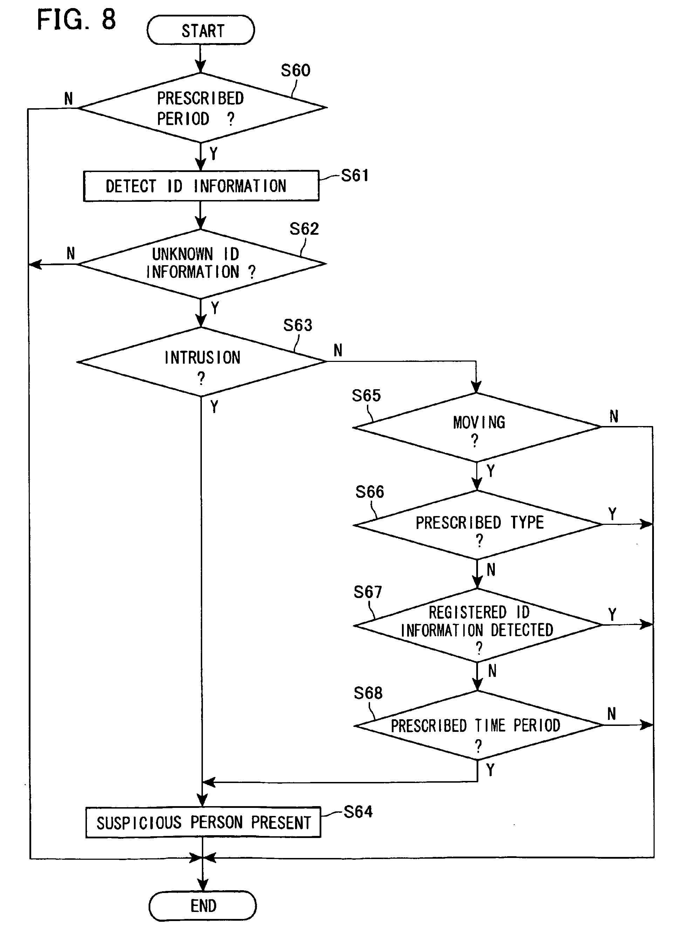

Once the initial ID information has been stored in memory by conducting the foregoing processing in step S2 of Figure 5, the theft detection mode is activated, and theft discrimination is then conducted based on suspicious person detection in step S3. The particulars of the theft discrimination processing conducted in step S3 will now be explained with reference to the flowchart of Figure 8.

First, in step S60, a check is made as to whether it is time to conduct theft discrimination. This embodiment is configured to conduct theft discrimination at prescribed time intervals (e.g., every five minutes) while the driver/passengers are away from the vehicle. This check is therefore for determining whether the prescribed time period has passed. When the result in step S60 is YES, control is passed to step S61, in which the IC chip readers 18, 20 are caused to detect ID information and the detected ID information is stored in memory.

Next, in step S62, it is checked whether the ID information detected in step S61 includes unknown D information not included in the initial ID information. When the result in step S62 is YES, control is passed to step S63, in which it is checked whether the intrusion sensor 14 detected intrusion into the vehicle.

When the result in step S63 is YES, control is passed to step S64, in which it is decided that theft has occurred or is likely to occur. At this time an alarm/notification is issued based on the detection result of the intrusion sensor 14.

When the result in step S63 is NO, control is passed to step S65, in which it is checked whether the unknown ID information detected in step S61 is moving. This check is made based on whether the reception strength of the ID information is found to have changed when the ID information is received again.

When the result in step S65 is YES, meaning that the unknown ID information is moving inside or near the vehicle, a suspicious person may be present, and control is passed to step S66 (a discrimination step). When the result in step S65 is NO, control is returned to step S3 in Figure 5.

When the result in step S65 is YES, i.e., when the unknown ID information is moving, control is passed to step S66, in which it is checked whether the number of sets of unknown ID information and the type thereof are a prescribed number and type. By way of example, the prescribed number might be "1" and the prescribed type might be "vehicle component."

If the unknown ID information is attributable to a person, multiple sets of ID information should be detected because a person normally wears clothes, shoes and so on. So if only a single set of unknown ID information is detected, it is reasonable to conclude that the unknown ID information is from an IC chip attached to the collar of dog passing nearby. In this embodiment, therefore, when only one set of unknown ID information is detected, the result in step S66 is YES, i.e., it is not decided that a suspicious person is present.

On the other hand, if the unknown ID information indicates that it relates to a "vehicle component," it is reasonable to conclude that the unknown ID information is from an IC chip attached to a component of a vehicle parked nearby. In this embodiment, therefore, when ID information on a vehicle component is detected, the result in step S66 is YES, i.e., it is not decided that a suspicious person is present, and control is returned to step S3 in Figure 5.

When the result in step S66 is NO, control is passed to the next discrimination step, step S67, in which it is checked whether ID information on an article owned by a user that was registered using the screen of Figure 4 is being simultaneously detected. When the result in step S67 is YES, it is safe to conclude that the unknown ID information is ID information from an IC chip attached to an article that the user returning to the vehicle fetched while away from the vehicle. Control is therefore returned to step S3 in Figure 5.

When the result in Step S67 is NO, control is passed to the next discrimination step, step S68, in which it is checked whether the unknown ID information has been continuously detected for a prescribed time period. The decision in this discrimination is made based on multiple ID information detections. When the result in step S68 is NO, it is decided that the unknown ID information is attributable to someone or something that happens to be passing near the vehicle. Control is therefore returned to step S3 in Figure 5.

When the result in step S68 is YES, control is passed to step S64, in which it is decided that the unknown ID information is attributable to a suspicious person, i.e., that a suspicious person is present (theft has occurred or is likely to occur).

After the forgoing processing for suspicious person detection (detection of theft or likelihood of theft) is completed in step S3 of the flowchart of Figure 5, control is passed to step S4, in which it is checked whether a suspicious person (theft or likelihood of theft) was detected. When the result in step S4 is YES, control is passed to step S5, in which notification of detection of a suspicious person (theft or likelihood of theft) is sent to the user's mobile terminal D or the like from the communications unit 12 of the vehicle on-board article theft warning system 1 and is then displayed on the user's mobile terminal D (step S6).

In step S5, then the IC chip readers 18, 20 are caused to detect ID information and the detection result is checked against the initial ID information to determine whether any ID information is missing. When there is found to be missing ID information, it is decided that the on-board article attached with the IC chip containing ID information corresponding to the missing ID information has been stolen.

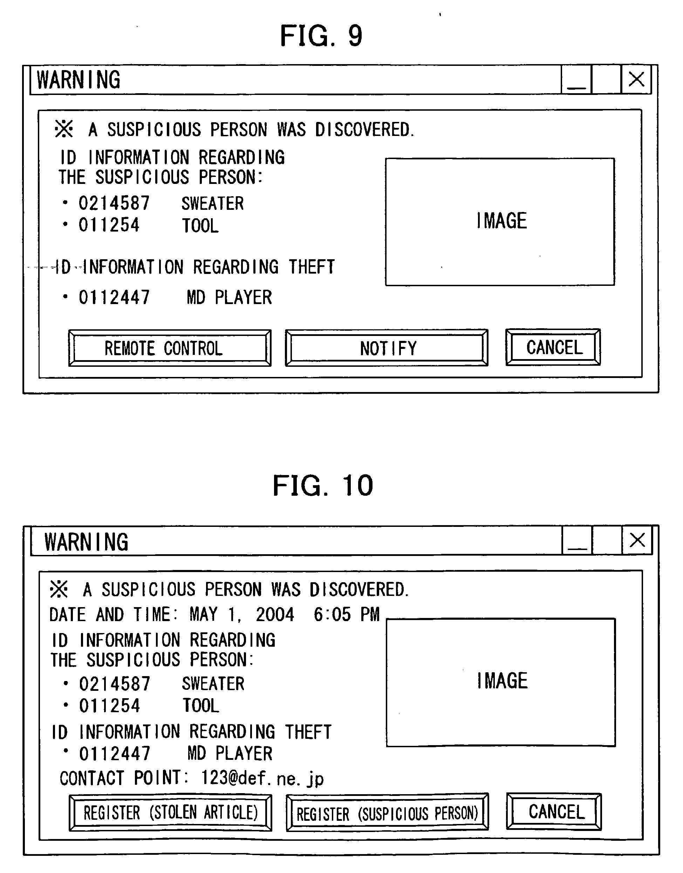

Figure 9 shows an example of a warning sent to and displayed on the screen of the user's mobile terminal D. As shown, the warning includes ID information on articles thought to be on the person of the suspicious person (time-of-theft ID information) and the names of the articles, and ID information on the on-board article(s) believed stolen and the name(s) thereof. The warning screen also displays an image of the vicinity of the vehicle (interior/exterior) imaged by and sent from the vehicle camera 16. In the example of Figure 9, the warning screen is designed to enable the user to operate the vehicle on-board article theft warning system from a remote location and to notify the police, for example.

When the result in step S4 is NO or the processing of step S5 has been completed, control is passed to step S7, in which it checked whether a vehicle door or doors are unlocked. When the result in step S7 is NO, it can be concluded that the driver/passengers have not returned to the vehicle, so control is returned to step S3 to repeat suspicious person detection.

When the result in step S7 is YES, it can be concluded that the driver/passengers have returned, so the theft detection mode is terminated and discrimination of on-board article theft is conducted in step S8 and the ensuing steps. The the intrusion sensor 14 is disabled simultaneously.

First, in step S8, the IC chip readers 18, 20 are caused to detect ID information on on-board articles. Next, in step S9, the ID information detected in step S8 is checked against the initial ID information stored in the stored ID database 26 of the on-board database 22. Next, in step S10, it is checked whether there exists ID information contained in the initial ID information but not detected in step S7 (missing ID information).

When the result in step S10 is YES, it is decided that the on-board article corresponding to the missing ID information was stolen and control is passed to step S11, in which a theft warning like that shown in Figure 10 is displayed on the on-board display 8 to inform the user of the theft.

The theft warning of Figure 10 displays not only the contents of the theft warning of Figure 9 but also the time the suspicious person was detected and the contact point to which the fact of the theft should be notified. It is also designed to enable the user to input instructions as to whether or not the stolen article and suspicious person should be registered. When the user inputs instructions to register, next, in step S 12, the ID information on the stolen article and the ID information on the suspicious person are sent to the information center 2 to be registered (step S13).

Further, the information center 2 sends the stolen article ID information and suspicious person ID information to the control units of the chip readers 4 at various locations for storage in the readers (step S14). Moreover, in step S15, a chip reader 4 that detects stolen article ID information or suspicious person ID information promptly sends it to the information center 2 (step S15).

The information center 2 sends the stolen article ID information, information on where it was detected, and other related information to the user's mobile terminal D (step S16) for display on the screen of the user's mobile terminal D (step S17). The information center 2 also notifies the police and other contact points, such as a security company, that stolen article ID information and the like were detected. It is possible to adopt either a configuration that automatically notifies the police, security company and/or other contact points at the same time as notifying the user or one that notifies these contact points when instructed by the user.

The invention is not limited to the embodiment described above, and various modifications or variations are allowable within the scope of the claims.

Although the foregoing embodiment is configured to have the user select the articles to be protected by the warning system, it is possible instead not to provide this selection feature but to make all on-board articles subject to protection by the warning system.

The ID information to be registered as initial ID information can be decided either by carrying out all of the steps in the flowchart of Figure 6 or, for example, by storing the initial ID information after executing only step S50 and/or step S52. Otherwise, the initial ID information can be stored only by executing step S57.

In the foregoing embodiment, ID information is sent to the external IC chip readers after theft was discriminated in step S 10 of the flowchart of Figure 5. However, it is instead possible to send the initial ID information to the external chip readers at the stage of defining the initial ID information at step S2 and thereafter detecting the ID information of articles to be protected by the warning system externally. This arrangement enables detection of stolen article ID information from immediately after theft occurred.

In the foregoing embodiment, the theft detection processing from step S8 onward is conducted in response to unlocking of the vehicle doors. However, the event that initiates the theft detection processing need not be the unlocking of the doors and the theft detection processing from step S8 onward can instead be conducted in response to one or a combination of two or more events among door opening, ignition turn-on, vehicle drive-away, and start of driving at higher than a prescribed speed.

In addition, the vehicle on-board article theft warning system can be configured to notify the user or a designated contact point of the time of occurrence of missing ID information (estimated time of theft) and the time-of-theft ID information upon request of the user.

## Claims

1. A vehicle on-board article theft warning system comprising:
detection means for detecting on-board article-specific ID information transmitted from IC chips attached to on-board articles;
ID information storing means at activation of a theft detection mode for storing as initial ID information the article-specific ID information detected by the detection means;
discrimination means after activation of the theft detection mode for comparing detected ID information consisting of on-board article-specific ID information detected by the detection means with the initial ID information and discriminating whether or not there exists missing ID information defined as ID information contained in the initial ID information but not contained in the detected ID information;
warning means responsive to a discrimination that missing ID information exists for determining that theft of an article corresponding to the missing ID information occurred and issuing a prescribed warning and the system
**characterised by** having
registration means for registering ID information on designated on-board articles beforehand; and
wherein the ID information storing means inhibits storage of ID information not registered in the registration means as initial ID information.

2. The vehicle on-board article theft warning system of claim 1, wherein the theft detection mode is activated upon elapse of a prescribed time period after locking of the vehicle doors.

3. The vehicle on-board article theft warning system of claim 1 or 2, wherein the detection means detects ID information at activation of the theft detection mode multiple times and the ID information storing means excludes from ID information to be stored as the initial ID information any ID information that was detected in the first of the multiple detections but was not detected in and after the second or a later detection.

4. The vehicle on-board article theft warning system of claim 1 or 2, wherein the detection means detects ID information at activation of the theft detection mode multiple times and the ID information storing means excludes from ID information to be stored as the initial ID information any ID information that was detected in the first of the multiple detections but was not detected simultaneously with pre-registered ID information in and after the second or a later detection.

5. The vehicle on-board article theft warning system of any of claims 1 to 4, wherein the detection means detects ID information at activation of the theft detection mode multiple times and the ID information storing means includes among ID information to be stored as the initial ID information any ID information that during the multiple detections was detected in a detection in which pre-registered ID information came not to be detected or in a detection thereafter.

6. The vehicle on-board article theft warning system of any of claims 1 to 5, wherein the detection means detects ID information at activation of the theft detection mode multiple times and the ID information storing means includes among ID information to be stored as the initial ID information only ID information detected in all detections during the multiple detections.

7. The vehicle on-board article theft warning system of any of claims 3 to 6, wherein the ID information storing means responds to discovery of new ID information in the second or a later detection of the multiple detections conducted at activation of the theft detection mode by transmitting to a prescribed user terminal a signal inquiring whether or not the new ID information is to be registered as initial ID information and respond to a response signal from the user terminal to the effect that it is to be registered by registering the newly detected ID information as initial ID information.

8. The vehicle on-board article theft warning system of any of claims 1 to 7, wherein the detection means detects ID information at activation of the theft detection mode multiple times, the theft warning system further comprises reception strength change detection means for detecting change in detected ID information reception strength multiple times, and the ID information storing means excludes from ID information to be stored as the initial ID information at the activation of the theft detection mode any ID information for which change in reception strength is detected by the reception strength change detection means.

9. The vehicle on-board article theft warning system of claim 8, wherein the detection means detects ID information at the activation of the theft detection mode multiple times starting from before the vehicle is stopped and the ID information storing means excludes from ID information to be stored as the initial ID information any ID information not detected during vehicle driving.

10. The vehicle on-board article theft warning system of any of claims 1 to 9, wherein the ID information detection by the detection means after activation of the theft detection mode and the comparison/discrimination by the discrimination means are conducted at prescribed time intervals during theft detection mode operation.

11. The vehicle on-board article theft warning system of claim 10, wherein the theft warning system further comprises time memory means for storing the time of occurrence of the missing ID information and the warning means issues a notification of said time in addition to the prescribed warning.

12. The vehicle on-board article theft warning system of claim 10 or 11, wherein the theft warning system further comprises time-of-theft ID information storing means for storing ID information other than the initial ID information detected at the time of occurrence of missing ID information and the warning means issues a notification of the ID information stored by the time-of-theft ID information storing means in addition to the prescribed warning.

13. The vehicle on-board article theft warning system of any of claims 1 to 12, wherein the ID information detection after activation of the theft detection mode and the discrimination by the discrimination means are conducted during driving.

## Patentansprüche

1. Diebstahlsicherungsanlage für im Fahrzeug mitgeführte Gegenstände, welche umfasst:
Detektionsmittel zum Detektieren von für die mitgeführten Gegenstände spezifischen ID-Informationen, die von an den mitgeführten Gegenständen angebrachten IC-Chips übertragen werden;
ID-Informationen speicherndes Mittel bei Aktivierung eines Diebstahldetektionsmodus zum Speichern der gegenstandspezifischen ID-Informationen, die durch das Detektionsmittel detektiert werden, als anfängliche ID-Informationen;
Erkennungsmittel nach Aktivierung des Diebstahldetektionsmodus zum Vergleichen detektierter ID-Informationen, die aus durch das Detektionsmittel detektierten, für die mitgeführten Gegenstände spezifischen ID-Informationen bestehen, mit den anfänglichen ID-Informationen und Erkennen, ob fehlende ID-Informationen vorliegen, die als ID-Informationen festgelegt sind, die in den anfänglichen ID-Informationen enthalten sind, aber nicht in den detektierten ID-Informationen enthalten sind;
auf eine Erkennung reagierendes Warnmittel, dass fehlende ID-Informationen vorliegen, zum Ermitteln, dass ein Diebstahl eines Gegenstands entsprechend den fehlenden ID-Informationen eingetreten ist, und zum Ausgeben einer festgelegten Warnung; und wobei die Anlage **gekennzeichnet ist durch**
Erfassungsmittel zum Erfassen von ID-Informationen zu vorab festgelegten mitgeführten Gegenständen; und
wobei das ID-Informationen speichernde Mittel das Speichern von nicht in den Erfassungsmitteln als anfängliche ID-Informationen erfassten ID-Informationen unterbindet.

2. Diebstahlsicherungsanlage für im Fahrzeug mitgeführte Gegenstände nach Anspruch 1, **dadurch gekennzeichnet, dass** der Diebstahldetektionsmodus nach Ablauf einer festgelegten Zeitspanne nach dem Verriegeln der Fahrzeugtüren aktiviert wird.

3. Diebstahlsicherungsanlage für im Fahrzeug mitgeführte Gegenstände nach Anspruch 1 oder 2, **dadurch gekennzeichnet, dass** das Detektionsmittel bei Aktivierung des Diebstahldetektionsmodus mehrere Male ID-Informationen detektiert und das ID-Informationen speichernde Mittel von den als anfängliche ID-Informationen zu speichernden ID-Informationen jegliche ID-Informationen ausschließt, die in der ersten der mehreren Detektionen detektiert, aber nicht in oder nach der zweiten oder einer späteren Detektion detektiert wurden.

4. Diebstahlsicherungsanlage für im Fahrzeug mitgeführte Gegenstände nach Anspruch 1 oder 2, **dadurch gekennzeichnet, dass** das Detektionsmittel bei Aktivierung des Diebstahldetektionsmodus mehrere Male ID-Informationen detektiert und das ID-Informationen speichernde Mittel von den als anfängliche ID-Informationen zu speichernden ID-Informationen jegliche Informationen ausschließt, die in der ersten der mehreren Detektionen detektiert, aber nicht gleichzeitig mit in oder nach der zweiten oder einer späteren Detektion vorab erfassten ID-Informationen detektiert wurden.

5. Diebstahlsicherungsanlage für im Fahrzeug mitgeführte Gegenstände nach einem der Ansprüche 1 bis 4, **dadurch gekennzeichnet, dass** das Detektionsmittel bei Aktivierung des Diebstahldetektionsmodus mehrere Male ID-Informationen detektiert und das ID-Informationen speichernde Mittel unter den als anfängliche ID-Informationen zu speichernden ID-Informationen jegliche ID-Informationen einschließt, die während der mehreren Detektionen in einer Detektion, in der keine vorab erfassten ID-Informationen detektiert wurden, oder in einer Detektion danach detektiert wurden.

6. Diebstahlsicherungsanlage für im Fahrzeug mitgeführte Gegenstände nach einem der Ansprüche 1 bis 5, **dadurch gekennzeichnet, dass** das Detektionsmittel bei Aktivierung des Diebstahldetektionsmodus mehrere Male ID-Informationen detektiert und das ID-Informationen speichernde Mittel unter den als anfängliche ID-Informationen zu speichernden ID-Informationen nur in allen Detektionen während der mehreren Detektionen detektierte ID-Informationen einschließt.

7. Diebstahlsicherungsanlage für im Fahrzeug mitgeführte Gegenstände nach einem der Ansprüche 3 bis 6, **dadurch gekennzeichnet, dass** das ID-Informationen speichernde Mittel auf die Entdeckung neuer ID-Informationen in der zweiten oder einer späteren Detektion der mehreren Detektionen, die bei Aktivierung des Diebstahldetektionsmodus durchgeführt werden, mit Übertragen eines Signals zu einem festgelegten Benutzer-Terminal reagiert, welches anfragt, ob die neuen ID-Informationen als anfängliche ID-Informationen erfasst werden sollen, und auf ein dahingehendes Antwortsignal von dem Benutzer-Terminal, dass sie durch das Erfassen der neu detektierten ID-Informationen als anfängliche ID-Information zu erfassen sind, antwortet.

8. Diebstahlsicherungsanlage für im Fahrzeug mitgeführte Gegenstände nach einem der Ansprüche 1 bis 7, **dadurch gekennzeichnet, dass** das Detektionsmittel bei Aktivierung des Diebstahldetektionsmodus mehrere Male ID-Informationen detektiert, die Diebstahlsicherungsanlage weiterhin Mittel zum Detektieren einer Änderung der Empfangsstärke zum mehrfachen Detektieren von Änderung der Empfangsstärke der detektierten ID-Informationen umfasst und das ID-Informationen speichernde Mittel von den bei Aktivierung des Diebstahldetektionsmodus als anfängliche ID-Informationen zu speichernden ID-Informationen jegliche ID-Informationen ausschließt, bei denen eine Änderung der Empfangsstärke durch das Mittel zum Detektieren einer Änderung der Empfangsstärke detektiert wird.

9. Diebstahlsicherungsanlage für im Fahrzeug mitgeführte Gegenstände nach Anspruch 8, **dadurch gekennzeichnet, dass** das Detektionsmittel bei Aktivierung des Diebstahldetektionsmodus beginnend vor dem Anhalten des Fahrzeugs mehrere Male ID-Informationen detektiert und das ID-Informationen speichernde Mittel von den als anfängliche ID-Informationen zu speichernden ID-Informationen jegliche ID-Informationen ausschließt, die nicht während des Fahrens des Fahrzeugs detektiert wurden.

10. Diebstahlsicherungsanlage für im Fahrzeug mitgeführte Gegenstände nach einem der Ansprüche 1 bis 9, **dadurch gekennzeichnet, dass** die ID-Informationsdetektion durch das Detektionsmittel nach Aktivierung des Diebstahldetektionsmodus und der Vergleich/die Erkennung durch das Erkennungsmittel während des Diebstahldetektionsbetriebs bei festgelegten Zeitintervallen durchgeführt werden.

11. Diebstahlsicherungsanlage für im Fahrzeug mitgeführte Gegenstände nach Anspruch 10, **dadurch gekennzeichnet, dass** die Diebstahlsicherungsanlage weiterhin Zeitspeicherungsmittel zum Speichern des Zeitpunkts des Vorkommens der fehlenden ID-Informationen umfasst und das Warnmittel zusätzlich zu der festgelegten Warnung eine Meldung über den Zeitpunkt liefert.

12. Diebstahlsicherungsanlage für im Fahrzeug mitgeführte Gegenstände nach Anspruch 10 oder 11, **dadurch gekennzeichnet, dass** die Diebstahlsicherungsanlage weiterhin ID-Informationen zum Zeitpunkt des Diebstahls speichernde Mittel zum Speichern von anderen ID-Informationen als den anfänglichen ID-Informationen, die zum Zeitpunkt des Vorkommens von fehlenden ID-Informationen detektiert werden, umfasst und das Wammittel zusätzlich zu der festgelegten Warnung eine Meldung der von den ID-Informationen zum Zeitpunkt des Diebstahls speichernden Mitteln gespeicherten ID-Informationen ausgibt.

13. Diebstahlsicherungsanlage für im Fahrzeug mitgeführte Gegenstände nach Anspruch 1 bis 12, **dadurch gekennzeichnet, dass** die ID-Informationsdetektion nach Aktivierung des Diebstahldetektionsmodus und die Erkennung durch das Erkennungsmittel während des Fahrens durchgeführt werden.

## Revendications

1. Système d'alarme antivol pour des objets transportés dans un véhicule, comprenant :
des moyens de détection destinés à détecter des informations d'identification spécifiques d'un objet qui sont transmises à partir de puces à circuit intégré attachées à des objets transportés dans un véhicule ;
des moyens de stockage d'informations d'identification lors de l'activation d'un mode de détection de vol destinés à stocker les informations d'identification spécifiques d'un objet détectées par le moyen de détection comme informations d'identification initiales ;
des moyens de distinction suivant l'activation du mode de détection de vol destinés à comparer des informations d'identification détectées, qui consistent en des informations d'identification spécifiques d'un objet transporté dans le véhicule détectées par les moyens de détection, aux informations d'identification initiales et à distinguer s'il y a des informations d'identification manquantes qui sont définies comme informations d'identification contenues dans les informations d'identification initiales, mais qui ne sont pas contenues dans les informations d'identification détectées ;
des moyens d'alarme qui réagissent à une distinction indiquant qu'il y a des informations d'identification manquantes afin de déterminer que le vol d'un objet qui correspond aux informations d'identification manquantes a eu lieu et qui émettent un alarme prescrit, et le système étant **caractérisé en ce qu'**il possède des
moyens d'enregistrement destinés à enregistrer d'avance des informations d'identification sur des objets désignés transportés dans le véhicule ; et
le moyen de stockage d'informations d'identification empêchant le stockage d'informations d'identification qui ne sont pas enregistrées dans le moyen d'enregistrement comme informations d'identification initiales.

2. Système d'alarme antivol pour des objets transportés dans un véhicule selon la revendication 1, **caractérisé en ce que** le mode de détection de vol est activé lorsqu'une période de temps prescrite s'est écoulée après le verrouillage des portières du véhicule.

3. Système d'alarme antivol pour des objets transportés dans un véhicule selon la revendication 1 ou 2, **caractérisé en ce que** le moyen de détection détecte des informations d'identification à plusieurs reprises lors de l'activation du mode de détection de vol et **en ce que** le moyen de stockage d'informations d'identification exclut toutes les informations d'identification qui ont été détectées dans la première de la pluralité de détections, mais qui n'ont pas été détectées lors de et après la deuxième détection ou lors d'une détection ultérieure, des informations d'identification à être stockées comme informations d'identification initiales.

4. Système d'alarme antivol pour des objets transportés dans un véhicule selon la revendication 1 ou 2, **caractérisé en ce que** le moyen de détection détecte des informations d'identification à plusieurs reprises lors de l'activation du mode de détection de vol et **en ce que** le moyen de stockage d'informations d'identification exclut toutes les informations d'identification qui ont été détectées dans la première des plusieurs détections, mais qui n'ont pas été détectées simultanément avec des informations d'identification pré-enregistrées lors de et après la deuxième détection ou lors d'une détection ultérieure, des informations d'identification à être stockées comme informations d'identification initiales.

5. Système d'alarme antivol pour des objets transportés dans un véhicule selon l'une quelconque des revendications 1 à 4, **caractérisé en ce que** le moyen de détection détecte des informations d'identification à plusieurs reprises lors de l'activation du mode de détection de vol et **en ce que** le moyen de stockage d'informations d'identification inclut, parmi des informations d'identification à être stockées comme informations d'identification initiales, toutes les informations d'identification qui ont été détectées, parmi la pluralité de détections, lors d'une détection dans laquelle des informations d'identification pré-enregistrées ne pouvaient pas être détectées ou lors d'une détection qui avait lieu plus tard.

6. Système d'alarme antivol pour des objets transportés dans un véhicule selon l'une quelconque des revendications 1 à 5, **caractérisé en ce que** le moyen de détection détecte des informations d'identification à plusieurs reprises lors de l'activation du mode de détection de vol et **en ce que** le moyen de stockage d'informations d'identification inclut, parmi des informations d'identification à être stockées comme informations d'identification initiales, seulement des informations d'identification qui ont été détectées lors de toutes les détections pendant la pluralité de détections.

7. Système d'alarme antivol pour des objets transportés dans un véhicule selon l'une quelconque des revendications 3 à 6, **caractérisé en ce que** le moyen de stockage d'informations d'identification réagit à la découverte de nouvelles informations d'identification lors de la deuxième détection ou lors d'une détection ultérieure de la pluralité de détections effectuées lors de l'activation du mode de détection de vol en transmettant un signal demandant si les nouvelles informations d'identification doivent être enregistrées comme informations d'identification initiales à un poste d'utilisateur prescrit et en répondant à un signal de réponse provenant du poste d'utilisateur ayant le contenu qu'elles doivent être enregistrées, par l'enregistrement des nouvelles informations d'identification détectées comme informations d'identification initiales.

8. Système d'alarme antivol pour des objets transportés dans un véhicule selon l'une quelconque des revendications 1 à 7, **caractérisé en ce que** le moyen de détection détecte des informations d'identification à plusieurs reprises lors de l'activation du mode de détection de vol, **en ce que** le système d'alarme antivol comprend en outre des moyens de détection d'un changement de l'intensité de la réception destinés à détecter à plusieurs reprises un changement de l'intensité de la réception des informations d'identification détectées, et **en ce que** le moyen de stockage d'informations d'identification exclut toutes les informations d'identification pour lesquelles un changement de l'intensité de la réception est détecté par le moyen de détection d'un changement de l'intensité de la réception, des informations d'identification à être stockées comme informations d'identification initiales lors de l'activation du mode de détection de vol.

9. Système d'alarme antivol pour des objets transportés dans un véhicule selon la revendication 8, **caractérisé en ce que** le moyen de détection détecte des informations d'identification à plusieurs reprises lors de l'activation du mode de détection commençant avant que le véhicule soit arrêté, et **en ce que** le moyen de stockage d'informations d'identification exclut toutes les informations d'identification qui n'ont pas été détectées pendant que le véhicule roulait, des informations d'identification à être stockées comme informations d'identification initiales.

10. Système d'alarme antivol pour des objets transportés dans un véhicule selon l'une quelconque des revendications 1 à 9, **caractérisé en ce que** la détection des informations d'identification effectuée par le moyen de détection suivant l'activation du mode de détection de vol et la comparaison/distinction effectuée par le moyen de distinction sont effectuées à des intervalles prescrits pendant le fonctionnement du mode de détection de vol.

11. Système d'alarme antivol pour des objets transportés dans un véhicule selon la revendication 10, **caractérisé en ce que** le système d'alarme antivol comprend en outre des moyens de mémoire de temps destinés à stocker le temps de l'occurrence des informations d'identification manquantes et **en ce que** le moyen d'alarme émet, outre l'alarme prescrit, un avertissement indiquant ledit temps.

12. Système d'alarme antivol pour des objets transportés dans un véhicule selon la revendication 10 ou 11, **caractérisé en ce que** le système d'alarme antivol comprend en outre des moyens de stockage d'informations d'identification relatives au temps du vol destinés à stocker des informations d'identification différentes des informations d'identification initiales détectées à l'instant de l'occurrence des informations d'identification manquantes, et **en ce que** le moyen d'alarme émet, outre l'alarme prescrit, un avertissement indiquant les informations d'identification stockées par le moyen de stockage d'informations d'identification relatives au temps du vol.

13. Système d'alarme antivol pour des objets transportés dans un véhicule selon l'une quelconque des revendications 1 à 12, **caractérisé en ce que** la détection des informations d'identification suivant l'activation du mode de détection de vol et la distinction effectuée par le moyen de distinction sont effectuées pendant la marche du véhicule.
